# EUROPÄISCHE PATENTSCHRIFT

(11) **EP 3 414 531 B1**
(45) Veröffentlichungstag und Bekanntmachung des Hinweises auf die Patenterteilung: **02.10.2019**
(21) Anmeldenummer: 17705048.1
(22) Anmeldetag: 06.02.2017
(51) Int. Cl.: G01F 1/84, G01F 15/00, B63B 25/08

(54) **MESSANORDNUNG ZUR ÜBERWACHUNG DER BEBUNKERUNG EINES GROSSSCHIFFS**
MEASUREMENT ARRANGEMENT FOR MONITORING THE BUNKERING OF A LARGE SHIP
ARRANGEMENT DE MESURE POUR SURVEILLER LE SOUTAGE D'UN GRAND BATEAU

(30) Priorität: 09.02.2016 DE 102016201933
(43) Veröffentlichungstag der Anmeldung: 19.12.2018
(73) Patentinhaber: Siemens Aktiengesellschaft, 80333 München (DE)
(72) Erfinder: WÜRFEL, Jörg-Andre, 19061 Schwerin (DE)
(86) Internationale Anmeldenummer: PCT/EP2017/052522
(87) Internationale Veröffentlichungsnummer: WO 2017/137347

(56) Entgegenhaltungen:
- EP-A1- 0 278 946
- WO-A1-00/58696
- WO-A1-2005/005938
- WO-A1-2015/165468
- WO-A2-01/31298
- DE-A1-102005 005 295
- US-A- 5 661 232

## Beschreibung

Die Erfindung betrifft eine Messanordnung zur Überwachung der Bebunkerung eines Großschiffs mit einem Flüssigprodukt der Mineralöl- oder petro-/chemischen Industrie.

Insbesondere bei hochwertigen Flüssigprodukten wie z. B. Kraft- oder Schmierstoffen besteht das Erfordernis, die bei einem Bunkervorgang übernommene Menge des Flüssigprodukts genau zu messen bzw. die Messung des Lieferanten zu verifizieren. Eine Füllstandsmessung in dem Bunkertank ist hierzu nicht geeignet, weil die dazu erforderliche Umrechnung von dem gemessenen Füllstand über das Volumen des Bunkertanks zur Masse des Flüssigprodukts zu ungenau und fehlerbehaftet ist. Außerdem wird dabei die in dem übernommenen Flüssigprodukt enthaltene Luft nicht berücksichtigt.

Aus diesem Grund wird während des Bunkervorgangs der Massendurchfluss des Flüssigprodukts mit Hilfe eines oder mehrerer parallel geschalteter Coriolis-Massendurchflussmesser gemessen, bei denen jeweils wenigstens ein von einem Medium, hier dem Flüssigprodukt, durchströmtes gebogenes Messrohr zu Schwingungen angeregt wird. Eine entsprechende Messanordnung ist aus der EP 2 613 126 A2 bekannt, wobei jedem Coriolis-Massendurchflussmesser ein Druck- und Temperaturmesser zugeordnet sein kann, der in Durchflussrichtung gesehen vor dem jeweiligen Coriolis-Massendurchflussmesser liegt und eine Bestimmung der Dichte des Flüssigprodukts ermöglicht. Umschaltventile ermöglichen es, das Flüssigprodukt an dem einen oder anderen Coriolis-Massendurchflussmesser vorbeizuleiten, wenn z. B. der betreffende Coriolis-Massendurchflussmesser nicht angeschlossen oder entfernt worden ist.

Aus der WO 2015/165468 A ist eine Messanordnung zur Überwachung der Bebunkerung eines Großschiffs mit einem Flüssigprodukt der Mineralölindustrie bekannt, bei der in einer in einen Bunkertank des Schiffs mündenden Bunkerleitung in Durchflussrichtung nacheinander ein Coriolis-Massendurchflussmesser, ein Druckmesser und ein Regelventil mit Stellantrieb und Stellungsregler angeordnet sind. Der Coriolis-Massendurchflussmesser, Druckmesser und Stellungsregler sind an einer Steuer- und Auswerteeinrichtung angeschlossen, die dazu ausgebildet ist, aus den von dem Coriolis-Massendurchflussmesser gelieferten Messwerten den Massendurchfluss und daraus abgeleitete Messgrößen des Flüssigprodukts zu ermitteln und während der Bebunkerung das Regelventil durch Ansteuerung der zugehörigen Stellungsregler in Abhängigkeit von den von den Coriolis-Massendurchflussmessern und den Druckmessern gelieferten Messwerten zu stellen.

Aus der US 4,884,441 ist ein Durchflussmesser mit variabler Kapazität bekannt, bei dem zumindest in dem ersten von zwei parallelen Strömungskanälen ein Durchflussmesser angeordnet ist, während der zweite Strömungskanal ein steuerbares Absperrventil enthält, das den zweiten Strömungskanal absperrt, wenn der in dem ersten Strömungskanal gemessene Durchfluss einen vorgegebenen Schwellenwert unterschreitet. Im Falle eines Coriolis-Massendurchflussmessers mit zwei zum Schwingen angeregten Messrohren ist das Absperrventil im Auslauf eines der beiden Messrohre angeordnet.

Ein Coriolis-Massendurchflussmesser ist beispielsweise aus der WO 2011/072711 A1 bekannt. Die Schwingungen werden am Einlauf und Auslauf des Messrohres aufgenommen und ausgewertet, indem aus der Phasendifferenz der Massendurchfluss und aus der Resonanzfrequenz des vollständig gefüllten Messrohres die Dichte des durchströmenden Flüssigprodukts ermittelt wird. Aus diesen beiden Messgrößen können weitere Messgrößen wie der Volumendurchfluss, und durch Messwertintegration bzw. -summierung die Gesamtmasse oder das Gesamtvolumen des übernommenen Flüssigprodukts berechnet werden.

Die nicht vorveröffentliche, älteren deutschen Patentanmeldung mit dem Aktenzeichen 10 2014 114 858.4 beschreibt ein Bunkermesssystem zum Befüllen eines Schiffs, mit einem Flüssigprodukt, wobei im Verlauf einer in einen Bunkertank des Schiffs mündenden Bunkerleitung parallele Rohrleitungen zum Aufteilen des einfließenden und Sammeln des ausfließenden Flüssigprodukts angeordnet sind. In den Rohrleitungen sind jeweils ein Coriolis-Massendurchflussmesser und ein Ventil angeordnet, bei dem es sich um ein Absperrventil oder ein Druckregelventil handeln kann. Das Ventil kann mit einer Steuerungsvorrichtung verbunden sein, die mit einem Drucksensor zum Erfassen des Drucks in der Flüssigkeit zwischen Einlass und Auslass oder mit dem Druckregelventil verbunden ist und bei Druck ab einem bestimmten Schwellenwert das Ventil öffnet und bei einem Abfall des Druckes unter den Schwellenwert das Ventil schließt. Dabei passt sich das Bunkermesssystem automatisch an den Massenstrom der Flüssigkeit an, so dass bei einem großen Massenstrom ein Coriolis-Massendurchflussmesser zugeschaltet und bei einem kleinen Massenstrom abgeschaltet wird.

Angesichts des hohen Fassungsvermögens von Bunkertanks und der entsprechend großen Menge des übernommenen Flüssigprodukts können bereits kleinste Messungenauigkeiten zu einem hohen absoluten Messfehler und entsprechend hohen Mehr- oder Minderkosten für die Bunkerung führen.

Der Erfindung liegt daher die Aufgabe zugrunde, mit einfachen Mitteln eine möglichst genaue Überwachung der Bebunkerung eines Großschiffs zu ermöglichen.

Gemäß der Erfindung wird die Aufgabe durch die in Anspruch 1 angegebene Messanordnung gelöst.

Gegenstand der Erfindung ist ferner ein Verfahren zum Betreiben dieser Messanordnung gemäß Anspruch 6.

Der Durchfluss-Schwellenwert ist so gewählt, dass er im Wesentlichen der Obergrenze des optimalen Messbereichs des Coriolis-Massendurchflussmessers entspricht. Da die absolute Messgenauigkeit und Wiederholgenauigkeit im unteren Messbereich bei geringen Durchflüssen bis hin zu einem Durchflusswert von null zunehmen, wird der Gesamtdurchfluss des Flüssigprodukts derart auf die parallelen Rohrleitungen aufgeteilt, dass in nur einer der Rohrleitungen der Durchfluss zwischen null und dem vorgegebener Durchfluss-Schwellenwert liegt und in den übrigen Rohrleitungen entweder null ist oder den Durchfluss-Schwellenwert erreicht. Dadurch wird erreicht, dass unabhängig von der Größe des Gesamtdurchflusses auch im ungünstigsten Fall nur einer der Coriolis-Massendurchflussmesser in seinem unteren Messbereich misst, während alle übrigen Coriolis-Massendurchflussmesser in ihrem optimalen Messbereich arbeiten. Selbst wenn ein Coriolis-Massendurchflussmesser zur Verfügung steht, der zur Messung des maximal zu erwartenden Gesamtdurchflusses ausgelegt ist, ist es aus den oben angegebenen Gründen von Vorteil, anstelle des einen Coriolis-Massendurchflussmessers zwei parallel geschaltete Coriolis-Massendurchflussmesser vorzusehen, um dadurch die Gesamtgenauigkeit der Messung zu erhöhen.

Insbesondere wird durch die Erfindung die Messgenauigkeit während der Anfangs- und Endphase der Bebunkerung erhöht, wenn der Durchfluss des Flüssigproduktes von null anfangend zunimmt bzw. auf null abfällt. Entsprechend wird in der Anfangsphase der Bebunkerung in vorteilhafter Weise nur ein Regelventil geöffnet, wobei und die anfangs geschlossenen übrigen Regelventile nacheinander jedes Mal dann geöffnet werden, wenn in den Rohrleitungen mit den geöffneten Regelventilen der gemessene Durchfluss den Durchfluss-Schwellenwert erreicht ist. Umgekehrt werden in der Endphase der Bebunkerung die geöffneten Regelventile nacheinander geschlossen.

Während der Bebunkerung werden die Regelventile zusätzlich auch in Abhängigkeit von den von den Druckmessern gelieferten Messwerten individuell geregelt, dass der gemessene Druck einen vorgegebenen Druck-Schwellenwert nicht unterschreitet. Damit wird erreicht, dass das Flüssigprodukts in den Coriolis-Massendurchflussmessern, also während der Durchflussmessung, einen Mindestdruck hat, so dass in dem zu messenden Flüssigprodukt enthaltene Luftblasen klein und stabil gehalten werden und so die Messung nicht verfälschen können.

Vorzugsweise wird der vorgegebene Druck-Schwellenwert erhöht, wenn während der Bebunkerung erfasste Qualitätsparameter der Coriolis-Massendurchflussmesser sich verschlechtern und auf Veränderungen der Luftmenge oder Luftblasengröße in dem zu messenden Flüssigprodukt hinweisen. Durch das Eindrosseln des Massendurchflusses und die Erhöhung der Kompression über die Regelventile wird das Flüssigkeits-Luft-Gemisch homogenisiert. Bei einem Coriolis-Massendurchflussmesser mit wenigstens einem von dem Flüssigprodukt durchströmten gebogenen Messrohr, einer das Messrohr zu Schwingungen anregenden Erregeranordnung und Aufnehmern zur Erfassung der Schwingungen sind insbesondere der Erregerstrom für die Erregeranordnung, die von den Aufnehmern generierten Messspannungen und/oder die Resonanzfrequenzen der schwingenden Messrohre als zu überwachende Qualitätsparamater geeignet.

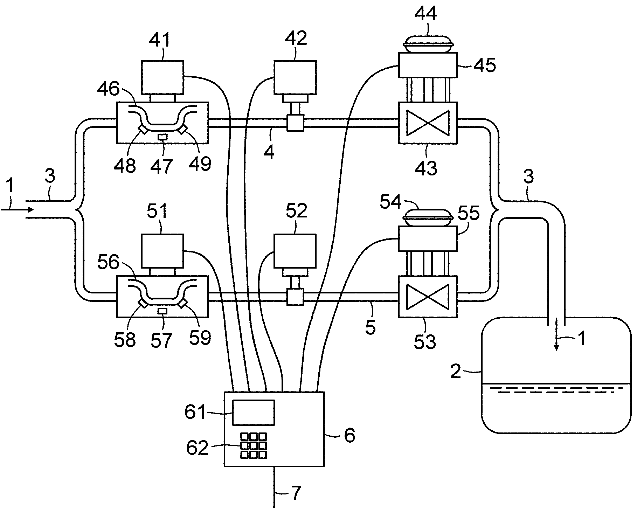

Die einzige Figur der Zeichnung zeigt in sehr vereinfachter schematischer Darstellung ein Ausführungsbeispiel der erfindungsgemäßen Messanordnung zur Überwachung der Bebunkerung eines Großschiffs mit einem Flüssigprodukt 1 wie z. B. Schweröl. Die Messanordnung ist in einer von einem hier nicht gezeigten Übernahmeanschluss (Bunker Manifold) zu einem Bunkertank 2 führenden fallenden Bunkerleitung 3 installiert und weist hier zwei gleiche parallele Rohrleitungen 4, 5 auf, um das einfließende Flüssigprodukt 1 aufzuteilen und das ausfließende Flüssigprodukt wieder zu sammeln. In jeder Rohrleitung 4, 5 sind jeweils in Durchflussrichtung nacheinander ein Coriolis-Massendurchflussmesser 41, 51, ein Druckmesser 42, 52 und ein Regelventil 43, 53 mit Stellantrieb 44, 54 und Stellungsregler 45, 55 angeordnet. Die Coriolis-Massendurchflussmesser 41, 51, Druckmesser 42, 52 und Stellungsregler 45, 55 sind an einer Steuer- und Auswerteeinrichtung 6 angeschlossen, die ein Display 61 und Eingabemittel 62 (z. B. Touch Panel) aufweist und über eine Kommunikationseinrichtung 7, z. B. einen Bus, mit einem hier nicht gezeigten übergeordneten Leitsystem des Schiffs kommunizieren kann.

Die Steuer- und Auswerteeinrichtung 6 ist dazu ausgebildet, aus den von den Coriolis-Massendurchflussmessern 41, 42 gelieferten Messwerten den Massendurchfluss und daraus abgeleitete Messgrößen des Flüssigprodukts 1 zu ermitteln. Die ermittelten Messgrößen können auf dem Display 61 angezeigt, in einem Speicher des Steuer- und Auswerteeinrichtung 6 abgelegt und an das Leitsystem übertragen werden. Die Coriolis-Massendurchflussmesser 41, 42 liefern neben den Messwerten für den Massendurchfluss auch Messwerte für die Dichte und die Temperatur des Flüssigprodukts 1, so dass daraus der Volumendurchfluss berechnet werden kann. Durch Integrieren oder Aufsummieren der Messwerte können die seit Beginn der Bunkerung gelieferte Gesamtmasse bzw. das Gesamtvolumen des Flüssigprodukts 1 berechnet werden. Durch Vergleich der gemessenen Dichte des Flüssigprodukts 1 und der bekannten Dichte des luftfreien Flüssigprodukts kann der Luftanteil ermittelt und überwacht werden.

Während der Bebunkerung werden die Regelventile 43, 53 durch Ansteuerung der zugehörigen Stellungsregler 45, 55 in Abhängigkeit von den von den Coriolis-Massendurchflussmessern 41, 51 in der Weise individuell gestellt, dass der gemessene Durchfluss in nur einer der beiden Rohrleitungen 4, 5 größer als null und kleiner als ein vorgegebener Durchfluss-Schwellenwert ist und in der anderen Rohrleitung entweder null ist oder den Durchfluss-Schwellenwert erreicht. Außerdem werden die Regelventile 43, 53 in Abhängigkeit von den von den Druckmessern 42, 52 gelieferten Messwerten in der Weise individuell geregelt, dass der gemessene Druck einen vorgegebenen Druck-Schwellenwert nicht unterschreitet.

In der Praxis erfolgt dies so, dass in der Anfangsphase der Bunkerung nur ein Regelventil, z. B. 43, geöffnet ist, während das andere Regelventil 53 geschlossen ist. Dadurch findet keine Aufteilung des einfließenden Flüssigprodukts 1 statt, und sein Durchfluss wird allein von dem Coriolis-Massendurchflussmesser 41 gemessen. Erst wenn der gemessene Durchfluss den vorgegebenen Durchfluss-Schwellenwert erreicht, wird auch das andere Regelventil 53 geöffnet. In der Endphase der Bunkerung läuft der Vorgang umgekehrt ab, so dass dann, wenn der Gesamtdurchfluss des Flüssigprodukts 1 unter den vorgegebenen Durchfluss-Schwellenwert fällt, eines der Regelventile, z. B. 53, geschlossen ist und der Gesamtdurchfluss allein von dem Coriolis-Massendurchflussmesser 41 gemessen wird.

Wie schematisch angedeutet ist, weist jeder Coriolis-Massendurchflussmesser 41, 51 in bekannter Weise jeweils wenigstens ein von dem Flüssigprodukt 1 durchströmtes gebogenes Messrohr 46, 56 auf das mittels einer Erregeranordnung 47, 57, z. B. in Form eines Elektromagneten, zu Schwingungen angeregt wird. Die Schwingungen werden am Einlauf und Auslauf des Messrohres 46, 56 mit Aufnehmern 48, 49 bzw. 58, 59 erfasst und ausgewertet, indem aus der Phasendifferenz der Massendurchfluss und aus der Resonanzfrequenz des gefüllten Messrohres 46, 56 die Dichte des durchströmenden Flüssigprodukts 1 ermittelt wird. Zusätzlich werden der Erregerstrom für die Erregeranordnung 47, 57 und die von den Aufnehmern 48, 49 bzw. 58, 59 generierten Messspannungen als zu überwachende Qualitätsparamater erfasst, wobei die Steuer- und Auswerteeinrichtung 6 den oben erwähnten vorgegebenen Druck-Schwellenwert erhöht, d. h. die Regelventile 43, 53 androsselt, wenn sich die Qualitätsparameter der jeweils zugeordneten Coriolis-Massendurchflussmesser 41, 51 verschlechtern, also die Werte der Messspannungen und/oder der Treiberströme vorgegebene Wertebereiche verlassen. Da die Dichte des luftfreien Flüssigprodukt 1 bekannt ist, kann in gleicher Weise auch die Resonanzfrequenz als Qualitätsparameter herangezogen werden, um Veränderungen der Luftmenge oder Luftblasengröße in dem zu messenden Flüssigprodukt 1 zu detektieren und als Reaktion darauf das Flüssigkeits-Luft-Gemisch durch Eindrosseln des Massendurchflusses und Erhöhung der Kompression zu homogenisieren.

## Patentansprüche

1. Messanordnung, ausgeführt zur Überwachung der Bebunkerung eines Großschiffs mit einem Flüssigprodukt (1) der Mineralöl- oder petro-/chemischen Industrie, mit mindestens zwei im Verlauf einer in einen Bunkertank (2) des Schiffs mündenden Bunkerleitung (3) angeordneten parallelen Rohrleitungen (4, 5) zum Aufteilen des einfließenden und Sammeln des ausfließenden Flüssigprodukts (1),
- wobei in jeder der Rohrleitungen (4, 5) jeweils in Durchflussrichtung nacheinander ein Coriolis-Massendurchflussmesser (41, 51), ein Druckmesser (42, 52) und ein Regelventil (43, 53) mit Stellantrieb (44, 54) und Stellungsregler (45, 55) angeordnet sind und
- wobei die Coriolis-Massendurchflussmesser (41, 51), Druckmesser (42, 52) und Stellungsregler (45, 55) an einer Steuer- und Auswerteeinrichtung (6) angeschlossen sind, die dazu ausgebildet ist,
- aus den von den Coriolis-Massendurchflussmessern (41, 51) gelieferten Messwerten den Massendurchfluss und daraus abgeleitete Messgrößen des Flüssigprodukts (1) zu ermitteln und
- während der Bebunkerung die Regelventile (43, 53) durch Ansteuerung der zugehörigen Stellungsregler (45, 55) in Abhängigkeit von den von den Coriolis-Massendurchflussmessern (41, 51) und den Druckmessern (42, 52) gelieferten Messwerten in der Weise individuell zu stellen,
- dass der gemessene Durchfluss in nur einer der parallelen Rohrleitungen (4, 5) größer als null und kleiner als ein vorgegebener Durchfluss-Schwellenwert ist und in den übrigen Rohrleitungen (4, 55 entweder null ist oder den Durchfluss-Schwellenwert erreicht und
- dass dabei der gemessene Druck einen vorgegebenen Druck-Schwellenwert nicht unterschreitet.

2. Messanordnung nach Anspruch 1, **dadurch gekennzeichnet, dass** die Steuer- und Auswerteeinrichtung (6) weiterhin dazu ausgebildet ist, die Regelventile (43, 53) durch Ansteuerung der zugehörigen Stellungsregler (45, 55) in der Weise individuell zu stellen, dass in einer Anfangsphase der Bebunkerung nur ein Regelventil (z. B. 43) geöffnet ist und die anfangs geschlossenen übrigen Regelventile (53) nacheinander jedes Mal dann geöffnet werden, wenn in den Rohrleitungen (4, 5) mit den geöffneten Regelventilen (53) der gemessene Durchfluss den Durchfluss-Schwellenwert erreicht.

3. Messanordnung nach Anspruch 1 oder 2, **dadurch gekennzeichnet, dass** die Steuer- und Auswerteeinrichtung (6) weiterhin dazu ausgebildet ist, die Regelventile (43, 53) durch Ansteuerung der zugehörigen Stellungsregler (45, 55) in der Weise individuell zu stellen, dass in einer Endphase der Bebunkerung die geöffneten Regelventile (43, 53) nacheinander geschlossen werden.

4. Messanordnung nach einem der vorangehenden Ansprüche, **dadurch gekennzeichnet, dass** die Steuer- und Auswerteeinrichtung (6) weiterhin dazu ausgebildet ist, während der Bebunkerung Qualitätsparameter der Coriolis-Massendurchflussmesser (41, 51) zu erfassen und bei deren Verschlechterung den vorgegebenen Druck-Schwellenwert zu erhöhen.

5. Messanordnung nach Anspruch 4, **dadurch gekennzeichnet, dass** die Coriolis-Massendurchflussmesser (41, 51) jeweils wenigstens ein von dem Flüssigprodukt (1) durchströmtes gebogenes Messrohr (46, 56), eine das Messrohr (46, 56) zu Schwingungen anregende Erregeranordnung (47, 57) und Aufnehmer (48, 49; 58, 59) zur Erfassung der Schwingungen enthalten und dass die verwendeten Qualitätsparameter den Erregerstrom für die Erregeranordnung (47, 57), die von den Aufnehmern (48, 49; 58, 59) generierten Messspannungen und/oder die Resonanzfrequenz umfassen.

6. Verfahren zum Betreiben der Messanordnung nach einem der vorangehenden Ansprüche.

## Claims

1. Measuring assembly designed for monitoring the bunkering of a large ship with a liquid product (1) of the mineral oil or petrochemical industry, comprising at least two parallel pipe lines (4, 5) arranged in the course of a bunker line (3) leading into a bunker tank (2) of the ship for dividing the inflowing and collecting the outflowing liquid product (1),
- wherein a Coriolis mass flow meter (41, 51), a pressure gauge (42, 52) and a control valve (43, 53) having an actuating drive (44, 54) and a position controller (45, 55) are arranged in each of the pipe lines (4, 5) one after the other in the flow direction and
- wherein the Coriolis mass flow meters (41, 51), pressure gauges (42, 52) and control valves (43, 53) are connected to a control and evaluation device (6), which is embodied
- to determine from the measured values delivered by the Coriolis mass flow meters (41, 51) the mass flow and relevant measured values of the liquid product (1) derived therefrom and
- during the bunkering, to set the control valves (43, 53) individually by controlling the associated position controllers (45, 55) as a function of the measured values delivered by the Coriolis mass flow meters (41, 51) and the pressure gauges (42, 52) in a manner such that
- the measured flow in only one of the parallel pipe lines (4, 5) is greater than zero and less than a predetermined threshold value and in the remaining pipelines (4, 55 is either zero or reaches the flow threshold value and
- in such cases the measured pressure does not fall below a predetermined pressure threshold value.

2. Measuring assembly according to claim 1, **characterised in that** the control and evaluation device (6) is further embodied to set the control valves (43, 53) individually by controlling the associated position controllers (45, 55) in a manner such that in a start phase of the bunkering only one control valve (e.g. 43) is opened and the initially closed remaining control valves (53) are opened one after the other each time that the measured flow reaches a flow threshold value in the pipe lines (4, 5) with the opened control valves (53).

3. Measuring assembly according to claim 1 or 2, **characterised in that** the control and evaluation device (6) is further embodied to set the control valves (43, 53) individually by controlling the associated position controllers (45, 55) in a manner such that, in an end phase of the bunkering, the opened control valves (43, 53) will be closed one after the other.

4. Measuring assembly according to one of the preceding claims, **characterised in that** the control and evaluation device (6) is further embodied to acquire quality parameters of the Coriolis mass flow meters (41, 51) during the bunkering and to raise the predetermined pressure threshold value if said parameters deteriorate.

5. Measuring assembly according to claim 4, **characterised in that** the Coriolis mass flow meters (41, 51) each contain at least one measurement conduit (46, 56) through which the liquid product (1) flows, an exciter arrangement (47, 57) exciting the measurement conduit (46, 56) into vibrations and sensors (49; 58, 59) for detecting the vibrations and that the quality parameters comprise the exciter current for the exciter arrangement (47, 57), the measurement voltages generated by the sensors (49; 58, 59) and/or the resonant frequency.

6. Method for operating the measuring assembly according to one of the preceding claims.

## Revendications

1. Système de mesure réalisé pour contrôler le soutage d'un grand bateau ayant un produit (1) liquide de l'industrie pétrolière ou pétrochimique, comprenant au moins deux canalisations (4, 5) parallèles, qui sont disposées dans le tracé d'un conduit (3) de soute débouchant dans la cuve (2) de soute du bateau et qui sont destinées à répartir le produit (1) liquide entrant et à collecter le produit (1) liquide sortant,
- dans lequel, dans chacune des canalisations (4, 5), sont montés, respectivement, les uns après les autres dans le sens de passage, un débitmètre (41, 51) massique de Coriolis, un manomètre (42, 52) et une vanne (43, 53) de réglage, comportant un organe (44, 54) moteur et un régleur (45, 55) de position et
- dans lequel le débitmètre (41, 51) massique de Coriolis, le manomètre (42, 52) et le régleur (45, 55) de position sont raccordés à un dispositif (6) de commande et d'exploitation, qui est constitué pour
- déterminer, à partir des valeurs de mesure fournies par les débitmètres (41, 51) massiques de Coriolis, le débit massique et des grandeurs de mesure qui s'en déduisent du produit (1) liquide et
- pendant le soutage régler individuellement les vannes (43, 53) de réglage par commande du régleur (45, 55) de position associé en fonction des valeurs de mesure fournies par les débitmètres (41, 51) massiques de Coriolis et les manomètres (42, 52), de manière
- à ce que le débit mesuré dans seulement l'une des canalisations (4, 5) parallèles soit supérieur à zéro et plus petit qu'une valeur de seuil de débit donnée à l'avance et dans les autres canalisations (4, 5) soit nul ou atteigne la valeur de seuil de débit et
- à ce que la pression mesurée ne devienne pas inférieure à une valeur de seuil de pression donnée à l'avance.

2. Système de mesure suivant la revendication 1, **caractérisé en ce que** le dispositif (6) de commande et d'exploitation est constitué, en outre, pour régler individuellement les vannes (43, 53) de réglage par commande des régleurs (45, 55) de position associés, de manière à ce que dans une phase initiale du soutage, seule une vanne de réglage (par exemple 43) soit ouverte et à ouvrir les autres vannes (53) de réglage fermées initialement l'une après l'autre chaque fois, si dans les canalisations (4, 5) ayant les vannes (53) de réglage ouvertes, le débit mesuré atteint la valeur de seuil de débit.

3. Système de mesure suivant la revendication 1 ou 2, **caractérisé en ce que** le dispositif (6) de commande et d'exploitation est constitué, en outre, pour régler individuellement les vannes (43, 53) de réglage par commande du régleur (45, 55) de position associé, de manière à ce que, dans une phase finale du soutage, les vannes (43, 53) de réglage ouvertes soient fermées les unes après les autres.

4. Système de mesure suivant l'une des revendications précédentes, **caractérisé en ce que** le dispositif (6) de commande et d'exploitation est constitué, en outre, pour, pendant le soutage, relever des paramètres de qualité des débitmètres (41, 51) massiques de Coriolis et à élever, s'ils se détériorent, la valeur de seuil de pression donnée à l'avance.

5. Système de mesure suivant la revendication 4, **caractérisé en ce que** les débitmètres (41, 51) massiques de Coriolis comportent chacun au moins un tube (46, 56) de mesure coudé, dans lequel passe le produit (1) liquide, un système (47, 57) d'excitation excitant en oscillations le tube (46, 56) de mesure et un récepteur (48, 49 ; 58, 59) pour détecter des oscillations et **en ce que** les paramètres de qualité utilisés comprennent le courant d'excitation du système (47, 57) d'excitation, les tensions de mesure produites par les récepteurs (48, 49 ; 58, 59) et/ou la fréquence de résonnance.

6. Procédé pour faire fonctionner le système de mesure suivant l'une des revendications précédentes.
